# EUROPEAN PATENT APPLICATION

(11) **EP 2 026 490 A2**
(43) Date of publication of application: **18.02.2009**
(21) Application number: 08159562.1
(22) Date of filing: 02.07.2008
(51) Int. Cl.: H04L 1/16

(54) **Transmission method, transmission device and computer program**

(30) Priority: 10.08.2007 JP 2007210514
(71) Applicant: Fujitsu Limited, Kawasaki-shi, Kanagawa 211-8588 (JP)
(72) Inventor: SHINOHARA, Chiaki, Fukuoka-shi, Fukuoka 814-8588 (JP); OBUCHI, Kazuhisa, Kawasaki-shi, Kanagawa 211-8588 (JP); SHIMIZU, Hirotoshi, Kawasaki-shi, Kanagawa 211-8588 (JP); OTONARI, Akihide, Fukuoka-shi, Fukuoka 814-8588 (JP); SOEJIMA, Yoshinori, Fukuoka-shi, Fukuoka 814-8588 (JP); YAMASAKI, Miki, Fukuoka-shi, Fukuoka 814-8588 (JP); OKAMOTO, Shinya, Fukuoka-shi, Fukuoka 814-8588 (JP)
(74) Representative: Holtby, Christopher Lawrence

(57) **Abstract**

Transmission and reception of a data unit such as RLC-PDU is performed more efficiently than the conventional method when a retransmission control is performed in radio communication such as mobile phone communication. If poll information is transmitted after RLC-SDU of a logical channel #1 has already been transmitted to a mobile phone terminal, the RLC-PDU is generated by using a header including the poll information but not by using the RLC-SDU on a layer 2 and then the RLC-PDU is sent to a layer 1.

## Description

The present invention relates to a method for radio communication and a transmission device or the like that is used for radio communication.

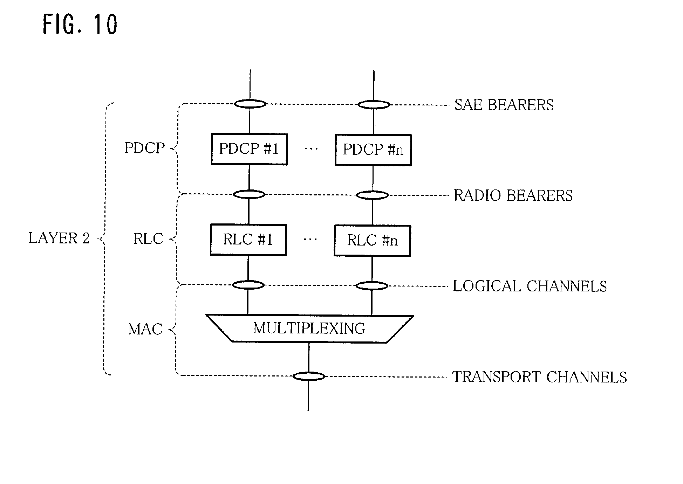

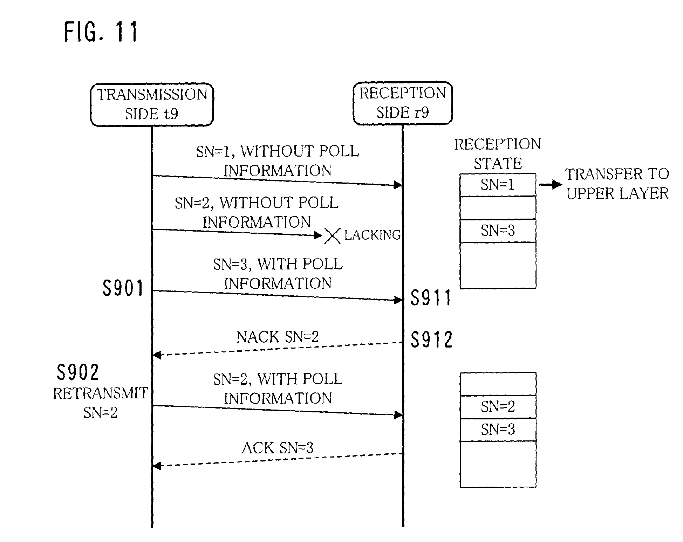

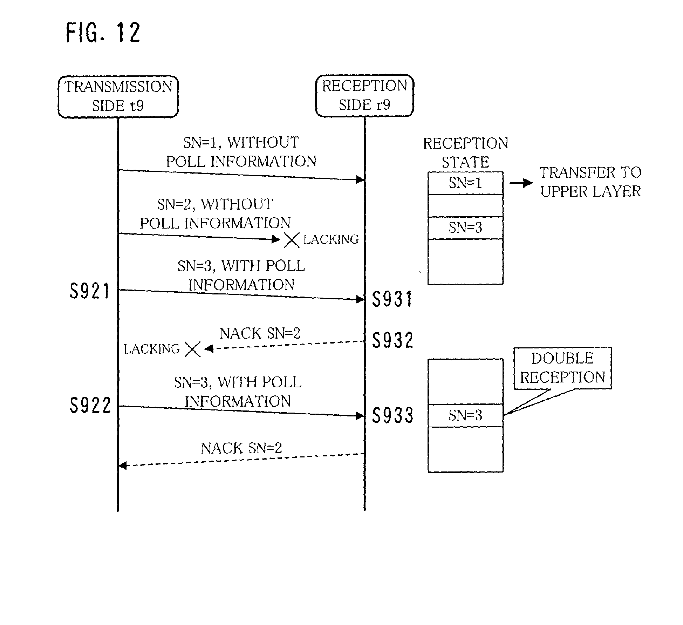

Fig. 10 is a diagram showing an example of a structure of a layer 2 of a radio communication protocol, and Figs. 11 and Fig. 12 are diagrams showing examples of a transmission and reception procedure of an RLC-PDU in the case of accompanying poll information.

The communication standard that is used for a cellular phone network is shifting gradually from the second generation (2G) communication standard to the third generation (3G) communication standard. A new communication standard is still being planned at present as described in "3GPP TS 36.300 V8.1.0 (2007-06)", published by 3GPP (The 3rd Generation Partnership Project), URL "http://www.3gpp.org/ftp/Specs/archive/36_series/36.300/36 300-810.zip", searched on the Internet on August 7, 2007.

The layer 2 of the cellular phone network protocol is structured as shown in Fig. 10, which includes sub layers such as a MAC (Medium Access Control) sub layer, an RLC (Radio Link Control) sub layer, a PDCP (Packet Data Convergence Protocol) sub layer and the like in order from the low order.

A plurality of PDCP entities and RLC entities are disposed corresponding to the number of logical channels (LCH) used by two devices that perform interactive communication.

The device on the transmission side generates an RLC-PDU (Protocol Data Unit) by adding a header to each RLC-SDU (Service Data Unit) of each RLC entity. The header includes protocol control information. This RLC-PDU is supplied to the MAC sub layer and is handled as a MAC-SDU. Then, the MAC-SDU of the individual RLC entities is multiplexed, given a header, so that a MAC-PDU is generated. Then, the MAC-PDU is sent to a device on the reception side.

In addition, a certain RLC entity of the device on the transmission side and a corresponding RLC entity of the device on the reception side perform a retransmission control by using poll and status information.

More specifically, as shown in Fig. 11 for example, an RLC entity t9 of a device on the transmission side transmits the RLC-PDU having a header including poll information to a corresponding RLC entity on the reception side (i.e., an RLC entity r9) so as to request status information (S901).

When the RLC entity r9 receives the RLC-PDU (S911), it detects the poll information from the same and generates status information that indicates a reception state of the RLC-PDU from the RLC entity t9 until the present (e.g., which sequence number of RLC-PDU is missing, or until which sequence number of RLC-PDU is received normally), and sends the status information to the RLC entity t9 (S912).

The RLC entity t9 retransmits the RLC-PDU based on the status information, if necessary (S902). In the example shown in Fig. 11, the RLC-PDU having the sequence number "2" is retransmitted.

There are a plurality of transmission triggers for the poll information. For example, there is the case where a state on the reception side becomes unknown or the case where the RLC-PDU of the last sequence number is transmitted. In addition, there is also the case where the poll information is transmitted regularly.

When the RLC entity on the transmission side requests the RLC entity on the reception side to send the status information, it transmits the RLC-PDU made up of the header including the poll information and the RLC-SDU to the RLC entity on the reception side as described above.

Therefore, if it requests the RLC entity on the reception side to send the status information after the transmission of all the RLC-SDU's or the RLC-PDU's is finished, it has to add the header including the poll information to any RLC-PDU that has already been transmitted (e.g., the RLC-PDU having the last sequence number) before transmitting it.

More specifically, as shown in Fig. 12 for example, the RLC entity t9 transmits the RLC-PDU made up of a payload of the last RLC-PDU having the sequence number "3" and the header including the poll information to the RLC entity r9 (S921) and then waits for reception of status information sent from the RLC entity r9 for a predetermined time.

When the RLC entity r9 receives this RLC-PDU (S931), it sends the status information to the RLC entity t9 (S932). This status information may be missing without being received by the RLC entity t9.

If the RLC entity t9 cannot receive the status information in a predetermined time, it retransmits the poll information. However, as described above, if the transmission of all the RLC-PDU's is finished, the poll information must be added to the last RLC-SDU, for example, before the retransmission (S922). Then, the RLC entity r9 receives the RLC-PDU again (S933).

In this way, there is the case where the RLC entity r9 receives the same RLC-SDU in an overlapping manner when the RLC entity t9 transmits the poll information. In other words, resources of the MAC-PDU may be wasted so that transmission and reception of the RLC-PDU of a different logical channel may be obstructed.

It is therefore desirable to make it possible to perform transmission and reception of data more efficiently than the conventional method in the case where the retransmission control is performed.

A transmission method according to an aspect of the present invention is a transmission method for transmitting a first data unit to be transmitted to a reception device. The transmission method includes a generating step for generating a second data unit including at least one of control information and the first data unit, a transmitting step for transmitting the second data unit generated in the generating step to the reception device, and if it is necessary to transmit to the reception device predetermined process execution control information for making the reception device execute a predetermined process as the control information, the second data unit being generated in the generating step so as to include the predetermined process execution control information but, if appropriate, not to include the first data unit.

Preferably, if it is necessary to transmit to the reception device the predetermined process execution control information, in the case where all the first data units have already been transmitted to the reception device, the second data unit may be generated in the generating step so as to include the predetermined process execution control information but not to include any of the first data units, and in the case where there is a first data unit that has not yet been transmitted, the second data unit may be generated in the generating step so as to include the first data unit that has not yet been transmitted and the predetermined process execution control information.

A transmission method according to another aspect of the present invention is a transmission method for transmitting a first data unit to be transmitted to a reception device. The transmission method includes a generating step for generating a second data unit including control information and a part or a whole of the first data unit, a transmitting step for transmitting the second data unit generated in the generating step to the reception device, and if it is necessary to transmit to the reception device predetermined process execution control information for making the reception device execute a predetermined process as the control information, the second data unit being generated in the generating step so as to include a last one of a plurality of third data units obtained by dividing the first data unit.

According to the structure described above, transmission and reception of data can be performed more efficiently in the case where the retransmission control is performed.

Reference will now be made, by way of example, to the accompanying drawings, in which:
Fig. 1 is a diagram showing an example of an overall structure of a communication system.
Fig. 2 is a diagram showing an example of a structure of a function for transmission of a mobile phone terminal and a base station or a network controller that performs a process of the layer 2.
Fig. 3 is a diagram showing an example of a structure of a function for reception of a mobile phone terminal and a base station or a network controller that performs a process of the layer 2.
Fig. 4 is a flowchart for explaining an example of a flow of a transmission process of a MAC-PDU.
Fig. 5 is a diagram for explaining an example of a method for generating the MAC-PDU.
Fig. 6 is a diagram for explaining an example of a method for generating the MAC-PDU.
Fig. 7 is a flowchart for explaining an example of a flow of a reception process of a device on a reception side.
Fig. 8 is a diagram showing an example of handling of a data unit in the device on the reception side.
Fig. 9 is a diagram for explaining a variation of the method for generating the MAC-PDU.
Fig. 10 is a diagram showing an example of a structure of a layer 2 of a radio communication protocol.
Fig. 11 is a diagram showing an example of a transmission and reception procedure of an RLC-PDU in the case of accompanying poll information.
Fig. 12 is a diagram showing an example of a transmission and reception procedure of the RLC-PDU in the case of accompanying poll information.

Hereinafter, embodiments of the invention will now be described in detail with reference to the attached drawings.

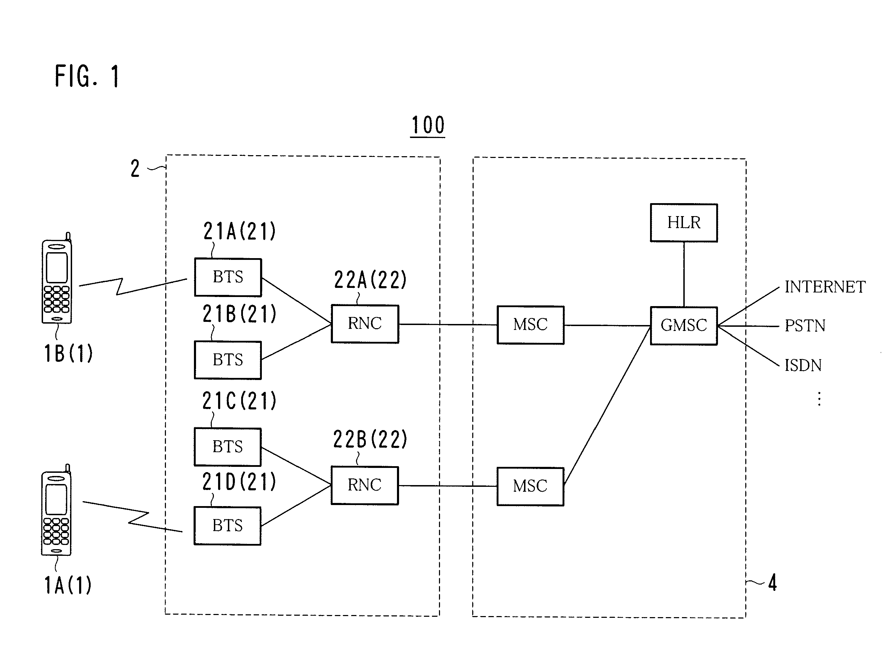

Fig. 1 is a diagram showing an example of an overall structure of a communication system 100.

The communication system 100 is a system for providing a radio communication service by using a cellular phone network to users, and it includes mobile phone terminals 1, a radio communication network 2 and a core network 4 as shown in Fig. 1.

The radio communication network 2 includes base transceiver stations (BTS's) 21 and radio communication network controllers (RNC's) 22, and performs a process for controlling connection of the mobile phone terminal 1 of a user, a process for relaying communication between the mobile phone terminal 1 and the core network 4, and the like.

The core network 4 includes mobile service switching centers (MSC's), a gateway MSC (GMSC) and a home location register (HLR).

The mobile phone terminal 1 is a terminal device for mobile phone communication that is used by a user. The mobile phone terminal 1 can perform communication with another mobile phone terminal 1, a PHS terminal, a socalled fixed telephone terminal and the like via the radio communication network 2, the core network 4 and the like. In addition, the mobile phone terminal 1 can perform communication with a web server, an electronic mail server or the like on the Internet.

A protocol that is used in the radio communication performed between the mobile phone terminal 1 and the radio communication network 2 is one obtained by applying the method of the present invention to the conventional radio communication protocol. Hereinafter, the radio communication performed between the mobile phone terminal 1 and the radio communication network 2 based on this protocol will be described in detail.

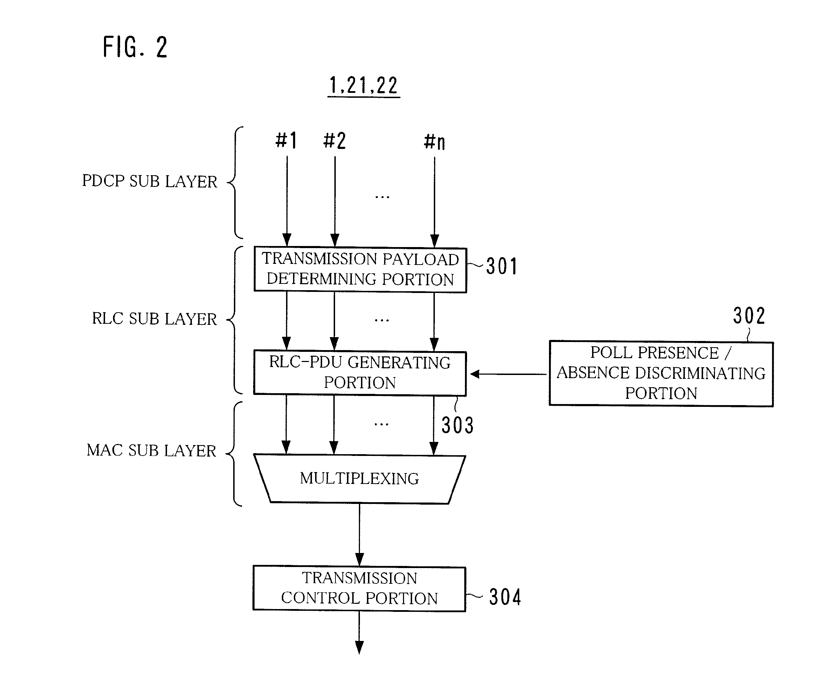

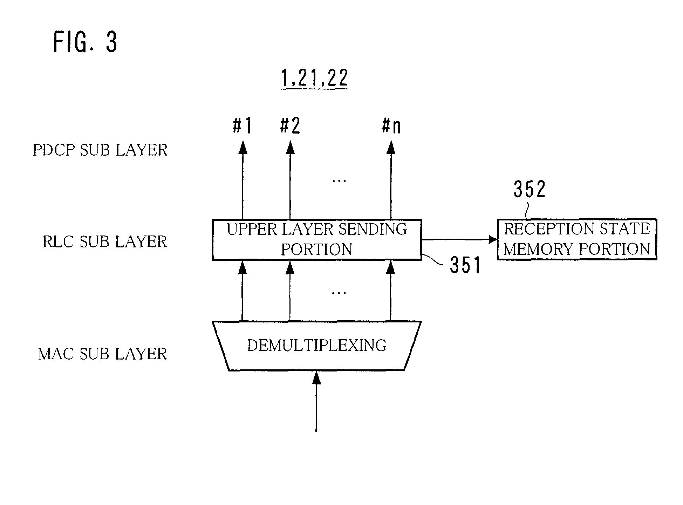

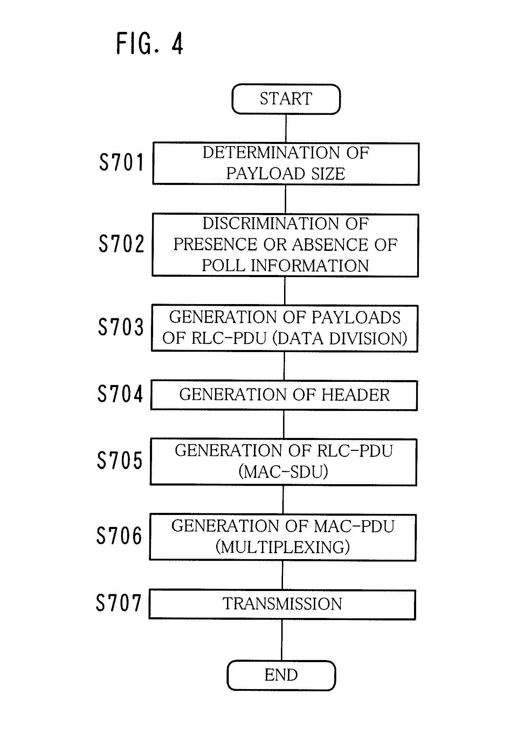

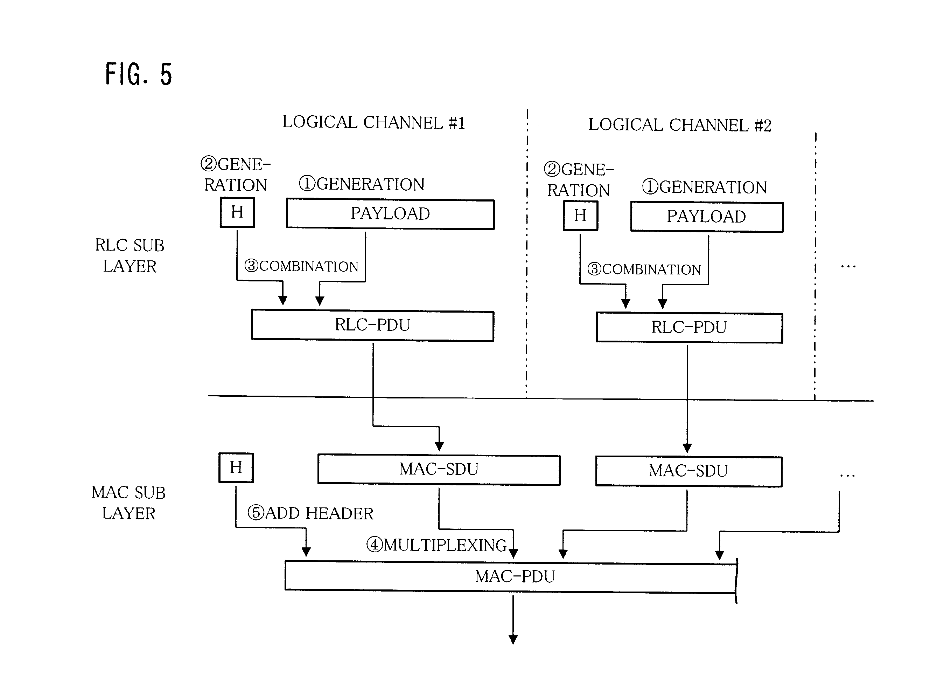

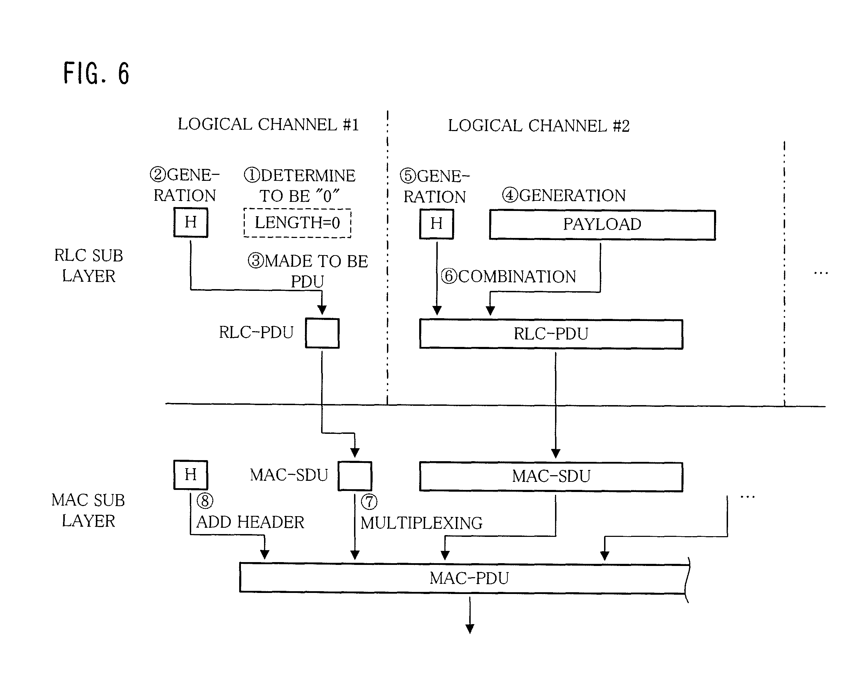

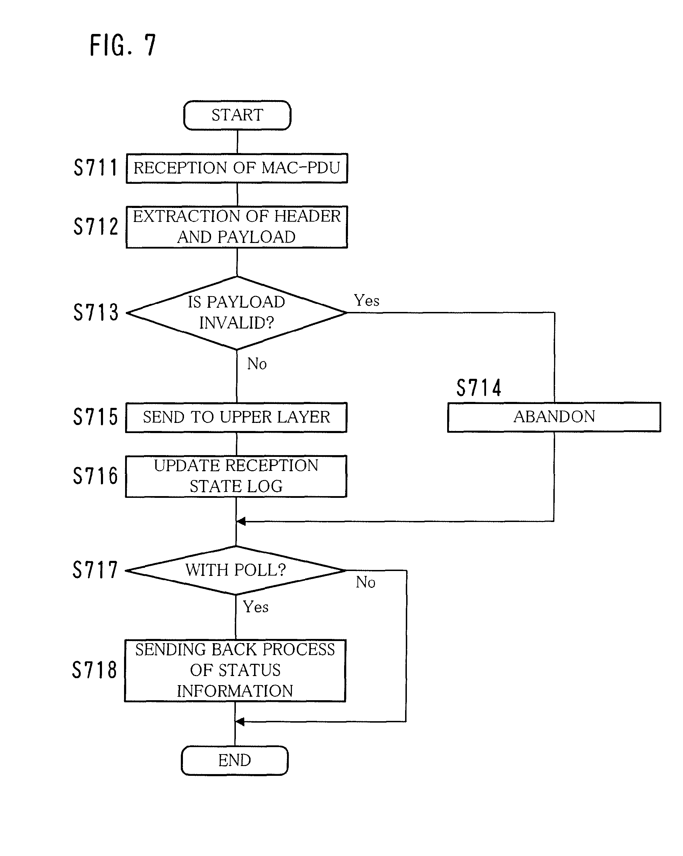

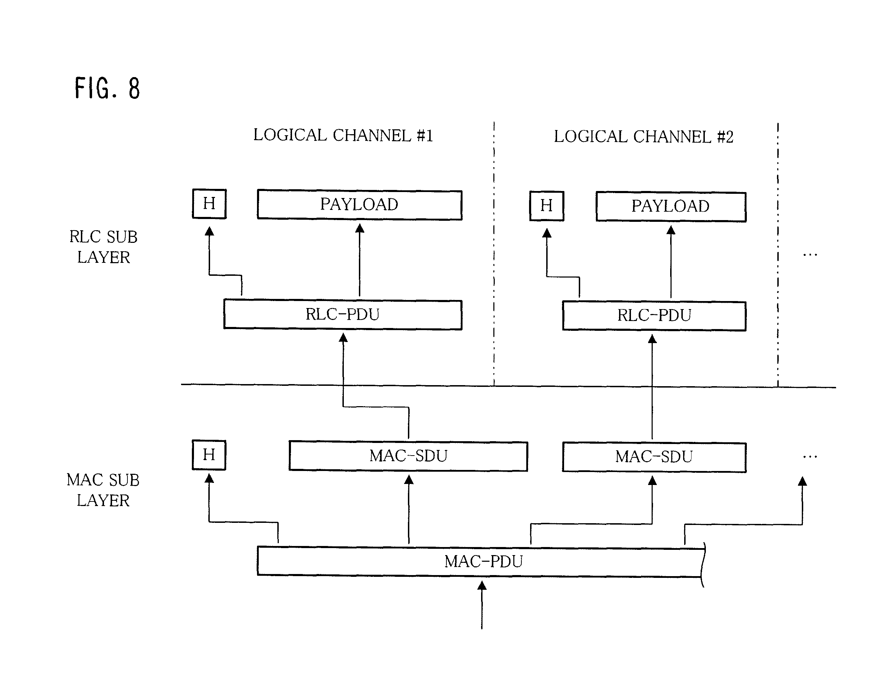

Fig. 2 is a diagram showing an example of a structure of a function for transmission of the mobile phone terminal 1 and a base station 21 or a network controller 22 that performs a process of the layer 2, Fig. 3 is a diagram showing an example of a structure of a function for reception of the mobile phone terminal 1 and the base station 21 or the network controller 22 that performs the process of the layer 2, Fig. 4 is a flowchart for explaining an example of a flow of a transmission process of a MAC-PDU, Figs. 5 and 6 are diagrams for explaining examples of a method for generating the MAC-PDU, Fig. 7 is a flowchart for explaining an example of a flow of a reception process of a device on a reception side, and Fig. 8 is a diagram showing an example of handling of a data unit in the device on the reception side.

As shown in Fig. 2, each device of the radio communication network 2 includes a transmission payload determining portion 301, a poll presence/absence discriminating portion 302, and an RLC-PDU generating portion 303 as means for the transmission process of data on the RLC sub layer of this protocol. In addition, as shown in Fig. 3, each device of the radio communication network 2 includes an upper layer sending portion 351 and a reception state memory portion 352 as means for the reception process of data on the RLC sub layer. Other than that, each device of the radio communication network 2 includes a transmission control portion 304 for controlling its communication device so that data including the RLC-PDU can be transmitted to the party on the other end, and the like.

These means may be included in the base station 21 or in the network controller 22. Which device includes the means is different generally depending on the generation. For example, the network controller includes them in 3G while the base station includes them in super 3G. Hereinafter, the case where the base station 21 includes the means shown in Fig. 2 will be described as an example.

The mobile phone terminal 1 also has the individual means shown in Fig. 2.

The means shown in Fig. 2 can be realized by a CPU controlling hardware based on software or by a special-purpose circuit.

Next, process contents of the individual portions shown in Figs. 2 and 3 will be described with reference to a flowchart and the like in which a case is exemplified
where a base station 21A transmits data (RLC-SDU) (hereinafter, may be referred to as "user data") received from the core network 4 to the mobile phone terminal 1B.

In the base station 21A, the transmission payload determining portion 301 shown in Fig. 2 determines lengths of the RLC-PDU payloads into which the user data is divided that is processed appropriately in the layer 3 and the PDCP sub layer of each logical channel. More specifically, the transmission payload determining portion 301 determines a length of the RLC-PDU payload of each logical channel (S701 in Fig. 4). The payload is determined relatively based on QoS of each logical channel. However, the determination process is not performed basically on a logical channel in which all the user data have been transmitted.

The poll presence/absence discriminating portion 302 determines whether or not the poll information (poll command) is provided to the header (RLC header) that is added to the RLC-SDU of each logical channel (S702). A case where it is determined that the poll information is provided is the case where the reception state on the reception side, i.e., the mobile phone terminal 1B becomes unknown or the case where the RLC-PDU of the last sequence number is transmitted, and the like as described above in "BACKGROUND OF THE INVENTION". The poll information may be provided at every predetermined sequence number or every time when a predetermined time has passed. Furthermore, it is determined independently for each logical channel whether or not the poll information is provided.

The RLC-PDU generating portion 303 divides the user data appropriately into data having a size determined by the transmission payload determining portion 301 for each logical channel so as to generate the payload (S703 and circled numeral 1 in Fig. 5), generates the RLC header that is added to the payload based on a result of the determination by the poll presence/absence discriminating portion 302 (S704, circled numeral 2), and combines them so as to generate the RLC-PDU (S705 and circled numeral 3). This RLC-PDU is used as the MAC-SDU on a MAC sub layer.

The process on the RLC sub layer is finished in this way. After that, the base station 21A multiplexes the RLC-PDU's (MAC-SDU's) of the individual logical channels on the MAC sub layer (circled numeral 4) and adds a header (MAC header) to the MAC-SDU (circled numeral 5) so as to generate the MAC-PDU (S706). Then, this MAC-PDU is transmitted to the mobile phone terminal 1B via the layer 1 (S707).

Note that the transmission payload determining portion 301 does not perform the determination process basically on a logical channel in which all the user data have been transmitted as described above. In addition, the RLC-PDU generating portion 303 does not generate the RLC-PDU for this logical channel.

However, if it becomes necessary to transmit the poll information for the logical channel in which transmission of the user data has been finished, the transmission payload determining portion 301 determines the RLC-PDU payload of the logical channel to be "0". The RLC-PDU generating portion 303 generates the RLC-PDU that does not include a payload for the logical channel. A value indicating that the RLC-SDU is invalid while the poll information is valid is written on the header of the RLC-PDU.

As shown in Fig. 12, for example, if there is no status information returned from the mobile phone terminal 1B in a predetermined time after all the user data of the logical channel #1 has been transmitted, it is necessary to transmit again the poll information to the RLC entity of the logical channel #1 on the mobile phone terminal 1B side.

Therefore, the transmission payload determining portion 301 determines the RLC-SDU payload of the logical channel #1 to be "0" as shown in Fig. 6 in the step S701 in Fig. 4 (circled numeral 1). The poll presence/absence discriminating portion 302 determines that the poll information is necessary in the step S702. The RLC-PDU generating portion 303 generates the header including poll information and a value indicating that the payload is invalid while the poll information is valid in the steps S704 and S705 (circled numeral 2), and converts the header into the PDU so that the RLC-PDU is generated (circled numeral 3).

In addition, the transmission payload determining portion 301 can assign the resources that become available when the RLC-PDU payload of the logical channel #1 is determined to be "0" to a part or the whole of the logical channels #2 to #n. The RLC-PDU generating portion 303 generates the payload of each of the logical channels #2 to #n based on the assignment so that the RLC-PDU is generated (circled numerals 4 to 6).

On the other hand, when the mobile phone terminal 1B receives the MAC-PDU from the base station 21A (S711 in Fig. 7), it extracts the header and the payload of each logical channel from the MAC-PDU as shown in Fig. 8 (S712).

The upper layer sending portion 351 shown in Fig. 3 sends the RLC-SDU for each logical channel independently to the upper layer in accordance with the necessity as follows.

If there is a value indicating that the payload is invalid or that only the poll information is valid (Yes in S713), this payload is discarded without being sent to the upper layer (S714).

If there is not the value indicating that the payload is invalid (No in S713), the RLC-SDU is generated from this payload and is sent to the upper layer in accordance with the necessity (S715). The reception state memory portion 352 updates log data indicating the reception state up to the present (S716).

Furthermore, if the header includes the poll information (Yes in S717), a process of sending the status information to the base station 21A based on the log data is performed (S718). The status information indicates by which sequence number of RLC-PDU the reception has been performed normally, or whether or not the RLC-PDU of the sequence number is not received, or the like. The base station 21A transmits or retransmits the RLC-PDU that the mobile phone terminal 1B has not yet received based on the status information.

According to the present embodiment, it is possible to prevent the device on the reception side from receiving the RLC-PDU's including the same payload in an overlapping manner when the retransmission control is performed with poll and status information. Thus, transmission and reception of data can be performed efficiently.

In addition, a method in which the RLC-PDU has a variable length is proposed in a new communication standard. When this method is realized, more resources can be assigned to other logical channels according to the present embodiment than the case of the conventional method. As a result, a decrease in throughput due to retention of data in other logical channels can be smaller than the case of the conventional method.

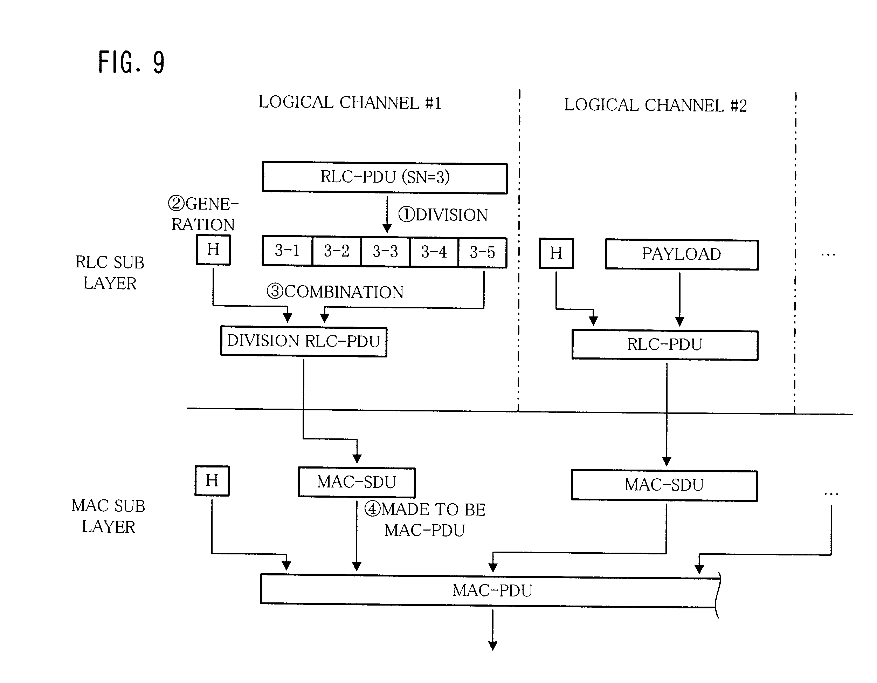

Fig. 9 is a diagram for explaining a variation of the method for generating the MAC-PDU.

In the present embodiment, although the poll information is transmitted with the payload of the RLC-PDU being "0" (i.e., without the RLC-SDU) if there is no user data or RLC-PDU that has not yet been transmitted, it may be transmitted by the method as shown in Fig. 9.

For example, it is supposed that after the base station 21A completed transmission of all the user data of the logical channel #1, it cannot receive status information indicating "ACK" from the mobile phone terminal 1B in a predetermined time. Then, it performs the following process.

Any RLC-PDU (e.g., the last sequence number of RLC-PDU or the RLC-PDU of the sequence number "3" in Fig. 9) that has already been transmitted is divided into units having a predetermined shortest length in this protocol (hereinafter referred to "division unit") (circled numeral 1). A header including the poll information is generated (circled numeral 2), and the last division unit is combined with its header so that a division RLC-PDU is generated (circled numeral 3). Furthermore, the header stores not only the poll information but also information on the number of all division units, the number of the division unit and the sequence number of the original RLC-PDU.

The RLC-PDU is generated also for other logical channels as appropriate by a process that is similar to the processes of the circled numerals 1 to 3 described above or the processes of the circled numerals 1 to 3 shown in Fig. 5 described above.

Then, the MAC-PDU is generated by combination with the MAC-SDU of another logical channel and by assigning the MAC header (circled numeral 4), and the MAC-PDU thus generated is transmitted to the mobile phone terminal 1B.

When the mobile phone terminal 1B receives the RLC-PDU of the logical channel #1, it sends the division unit that is attached to the RLC-PDU to the upper layer. In addition, the status information is sent to the base station 21A in accordance with the poll information as follows.

It is checked, based on the log data, whether another division unit having a number smaller than the division unit has already been received and the status information is sent as appropriate.

Although the case where data is transmitted from the base station 21 to the mobile phone terminal 1 is exemplified in the description of the present embodiment, the present invention can be applied to a case of the opposite direction. In addition, the present invention can also be applied to a case of communication between other devices.

Although the communication system 100 using a cellular phone network is exemplified in the description of the present embodiment, the present invention can be applied to a case of a communication system using another network such as a PHS or a wireless LAN.

Furthermore, the structure, the process contents, the process order and the like of the entire or each portion of the communication system 100, the mobile phone terminal 1, the radio communication network 2, the base station 21, or the network controller 22 can be modified as appropriate in accordance with the spirit of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A transmission method for transmitting a first data unit to be transmitted to a reception device (1B),
**characterized by** comprising:
a generating step for generating a second data unit including at least one of control information and the first data unit;
a transmitting step for transmitting the second data unit generated in the generating step to the reception device (1B), and
if it is necessary to transmit to the reception device (1B) predetermined process execution control information for making the reception device (1B) execute a predetermined process as the control information, the second data unit being generated in the generating step so as to include the predetermined process execution control information but, if appropriate, not to include the first data unit.

2. The transmission method according to claim 1, wherein
if it is necessary to transmit to the reception device (1B) the predetermined process execution control information, in the case where all the first data units have already been transmitted to the reception device (1B), the second data unit is generated in the generating step so as to include the predetermined process execution control information but not to include any of the first data units, and in the case where there is a first data unit that has not yet been transmitted, the second data unit is generated in the generating step so as to include the first data unit that has not yet been transmitted and the predetermined process execution control information.

3. The transmission method according to claim 1 or 2, wherein
if it is necessary to transmit the predetermined process execution control information, the second data unit is generated in the generating step so as to include validity information indicating that the predetermined process execution control information is valid while the first data unit is invalid.

4. A transmission method for transmitting a first data unit to be transmitted to a reception device (1B),
**characterized by** comprising:
a generating step for generating a second data unit including control information and a part or a whole of the first data unit;
a transmitting step for transmitting the second data unit generated in the generating step to the reception device (1B), and
if it is necessary to transmit to the reception device (1B) predetermined process execution control information for making the reception device (1B) execute a predetermined process as the control information, the second data unit being generated in the generating step so as to include a last one of a plurality of third data units obtained by dividing the first data unit.

5. The transmission method according to any preceding claim, wherein
the predetermined process is a process for sending information on status of the reception device (1B).

6. A transmission device (21A) for transmitting a first data unit to be transmitted to a reception device (1B),
**characterized by** comprising:
a generating portion (303) for generating a second data unit including at least one of control information and the first data unit;
a transmitting portion (304) for transmitting the second data unit generated by the generating portion (303) to the reception device (1B), and
if it is necessary to transmit to the reception device (1B) predetermined process execution control information for making the reception device (1B) execute a predetermined process as the control information, the generating portion (303) generating the second data unit so as to include the predetermined process execution control information but, if appropriate, not to include the first data unit.

7. The transmission device (21A) according to claim 6, wherein
if it is necessary to transmit to the reception device (1B) the predetermined process execution control information, in the case where all the first data units have already been transmitted to the reception device (1B), the generating portion (303) generates the second data unit so as to include the predetermined process execution control information but not to include any of the first data units, and, in the case where there is a first data unit that has not yet transmitted, the generating portion (303) generates the second data unit so as to include the first data unit that has not yet been transmitted and the predetermined process execution control information.

8. The transmission device (21A) according to claim 6 or 7, wherein
if it is necessary to transmit the predetermined process execution control information, the generating portion (303) generates the second data unit so as to include validity information indicating that the predetermined process execution control information is valid while the first data unit is invalid.

9. A transmission device (21A) for transmitting a first data unit to be transmitted to a reception device (1B),
**characterized by** comprising:
a generating portion (303) for generating a second data unit including control information and a part or a whole of the first data unit;
a transmitting portion (304) for transmitting the second data unit generated by the generating portion (303) to the reception device (1B), and
if it is necessary to transmit to the reception device (1B) predetermined process execution control information for making the reception device (1B) execute a predetermined process as the control information, the generating portion (303) generating the second data unit so as to include a last one of a plurality of third data units obtained by dividing the first data unit.

10. A computer program for use in a transmission device (21A) for transmitting a first data unit to be transmitted to a reception device (1B),
**characterized by** making the transmission device (21A) execute processes comprising:
a generating process for generating a second data unit including at least one of control information and the first data unit;
a transmission process for transmitting the second data unit generated in the generating process to the reception device (1B), and
if it is necessary to transmit to the reception device (1B) predetermined process execution control information for making the reception device (1B) execute a predetermined process as the control information, the computer program making the transmission device (21A) execute the generating process so as to generate the second data unit including the predetermined process execution control information but, if appropriate, not including the first data unit.

11. A computer program for use in a transmission device (21A) for transmitting a first data unit to be transmitted to a reception device (1B),
**characterized by** making the transmission device (21A) execute processes comprising:
a generating process for generating a second data unit including control information and a part or a whole of the first data unit;
a transmission process for transmitting the second data unit generated in the generating process to the reception device (1B), and
if it is necessary to transmit to the reception device (1B) predetermined process execution control information for making the reception device (1B) execute a predetermined process as the control information, the computer program making the transmission device (21A) execute the generating process so as to generate the second data unit including a last one of a plurality of third data units obtained by dividing the first data unit.
